# EUROPEAN PATENT APPLICATION

(11) **EP 4 661 441 A1**
(43) Date of publication of application: **10.12.2025**
(21) Application number: 24852217.9
(22) Date of filing: 02.08.2024
(51) Int. Cl.: H04W 4/10, H04W 4/08, H04W 4/90, H04W 4/02, H04W 76/45, H04L 65/4038, H04L 65/4061

(54) **METHOD AND APPARATUS FOR PROVIDING MCPTT SERVICE**

(30) Priority: 07.08.2023 KR 20230103040
(71) Applicant: Samsung Electronics Co., Ltd., Suwon-si, Gyeonggi-do 16677 (KR)
(72) Inventor: HOSSAIN, Md. Imtiaz, 1205 Dhaka (BD); POLIN, Md. Zahid Hasan, 1205 Dhaka (BD); CHOWDHURY, Towsif Alam, 1205 Dhaka (BD); MAHBUB, Shafquat, 1205 Dhaka (BD)
(74) Representative: Nederlandsch Octrooibureau
(86) International application number: PCT/KR2024/011400
(87) International publication number: WO 2025/033863

(57) **Abstract**

An example method for providing a Mission Critical Push To Talk (MCPTT) service may include receiving a message created from any one user among users of an MCPTT group, analyzing the message, and setting a floor priority of the users of the MCPTT group, based on a result of analyzing the message. The analyzing of the message includes classifying a type of the message. The classifying of the type of the message includes identifying whether the message is an interrogative type message or an imperative type message.

## Description

### [Technical Field]

The disclosure relates to a method and apparatus for setting a priority of a right-to-speak (i.e., a floor) related to Mission Critical Push To Talk (MCPTT).

### [Background Art]

There is growing interest in mission critical communications technologies for public safety. A Third Generation Partnership Project (3GPP) forum is in the process of establishing standards for Mission Critical Push To Talk (MCPTT) communications, and functional models and information flows have been developed to enable selective and sequential transmission of media to each other for some scenarios such as private calls (one-to-one) and group calls (one-to-many).

MCPTT is a communication service which may be used in emergency or special situations, and has been developed to perform efficient communication in specific emergency situations. 3GPP has introduced an MCPTT service to allow a user such as an employee involved in mission-critical communications or a person in charge of first responses to effectively use an emergency service. The mission-critical service may be used to perform tasks generally associated with preventing loss of human life and/or property, such as police services, firefighting services, and emergency services. Therefore, the mission-critical service should be provided with a high level of reachability, availability, reliability, and Quality of Service (QoS).

The MCPTT service may provide communication between a plurality of users or communication between groups, and may support effective communication between the plurality of users or between groups having specific purposes. Therefore, important information is shared between users in a group, enabling quick transferring of a corresponding response command.

Regarding communication in an MCPTT system, it is important to set a floor priority for efficient communication. When a plurality of users communicate with each other, since the floor priority is set according to content of a message, important information related to decision making may be rapidly transmitted and received with respect to a person involved. Therefore, a technique of setting a priority, based on content of a message, may increase efficiency of communication in the MCPTT system, and there is a need for a technique related thereto.

In general, users in an MCPTT group may have the same floor priority, or may have a pre-set floor priority. In addition, it is common for supervisors or instructors to have a higher floor priority than general users. When a plurality of users have the same floor priority, a floor may be granted in such a manner that a user who first requests it gets the floor first. However, communication may be inefficient in an urgent situation or in a situation where waiting is required to speak in a specific scenario requiring immediate responses. Therefore, there is a need for a technique capable of changing a floor priority dynamically between equivalent users.

### [Disclosure of Invention]

### [Technical Problem]

An embodiment of the disclosure may provide a method and apparatus for effectively performing communication between Mission Critical Push To Talk (MCPTT) groups in relation to an MCPTT service, and a technique thereof.

In addition, an embodiment of the disclosure may provide a method and apparatus for setting a floor priority based on content of a message, in relation to an MCPTT service, and a technique thereof.

### [Solution to Problem]

In an embodiment of the disclosure, a method for providing a Mission Critical Push To Talk (MCPTT) service may include receiving a message created from any one user among users of an MCPTT group, analyzing the message, and setting a floor priority of the users of the MCPTT group, based on a result of analyzing the message. The analyzing of the message may include classifying a type of the message and theclassifying of the type of the message may include identifying whether the message is an interrogative type message or an imperative type message.

### [Advantageous Effects of Invention]

A method and apparatus according to an embodiment of the disclosure may provide, for example, an advantage of optimizing communication efficiency of a Mission Critical Push To Talk (MCPTT) service.

In addition, a method and apparatus according to an embodiment may provide, for example, an advantage in which a floor priority is set based on content of a message created from a speaker, thereby enabling efficient communication between a plurality of parties.

Advantages provided in the disclosure are not limited to the aforementioned advantages, and other advantages not mentioned herein may be clearly understood by those skilled in the art to which the disclosure pertains from the following descriptions.

### [Brief Description of Drawings]

The above and other aspects, features and advantages of certain embodiments of the present disclosure will be more apparent from the following detailed description, taken in conjunction with the accompanying drawings, in which:
FIG. 1 illustrates an example apparatus for providing a Mission Critical Push To Talk (MCPTT) service according to various embodiments;
FIG. 2 illustrates an example method for providing an MCPTT service according to various embodiments;
FIG. 3 illustrates an example method of providing an MCPTT service in detail according to various embodiments;
FIG. 4 illustrates an example method of providing an MCPTT service in detail according to various embodiments;
FIG. 5 illustrates an example method in which a dispatcher (or a supervisor) sets location information to provide an MCPTT service according to various embodiments;
FIG. 6 illustrates an example method of providing an MCPTT service in detail according to various embodiments;
FIG. 7 illustrates an example method of providing an MCPTT service in detail according to various embodiments;
FIG. 8 illustrates an example method of providing an MCPTT service in detail according to various embodiments;
FIG. 9 illustrates an example of applying an MCPTT service according to various embodiments;
FIG. 10 illustrates an example of applying an MCPTT service according to various embodiments;
FIG. 11 illustrates an example of applying an MCPTT service according to various embodiments;
FIG. 12 illustrates an example of applying an MCPTT service according to various embodiments;
FIG. 13 illustrates an example of applying an MCPTT service according to various embodiments;
FIG. 14 illustrates an example of applying an MCPTT service according to various embodiments;
FIG. 15 illustrates an example name entity recognition algorithm for an MCPTT service according to various embodiments;
FIG. 16 illustrates an example organization (or affiliation, specialty) entity recognition algorithm for an MCPTT service according to various embodiments;
FIG. 17 illustrates an example place (or location) entity recognition algorithm for an MCPTT service according to various embodiments;
FIG. 18 illustrates an example urgency calculation algorithm for an MCPTT service according to various embodiments; and
FIG. 19 illustrates an example apparatus for providing an MCPTT service according to various embodiments.

### [Mode for the Invention]

Embodiments of the disclosure may address various problems and disadvantages, including those mentioned above, and may provide advantages described below. In an example embodiments, a terminal and a communication method thereof in a wireless communication system may be provided.

Terms used in the disclosure are for the purpose of describing particular example embodiments only and are not intended to limit other embodiments. A singular expression may include a plural expression unless there is a contextually distinctive difference. All terms (including technical and scientific terms) used herein have the same meaning as commonly understood by those ordinarily skilled in the art disclosed in the disclosure. It will be further understood that terms, such as those defined in commonly used dictionaries, should be interpreted as having a meaning that is consistent with their meaning in the context of the relevant art, and will not be interpreted in an idealized or overly formal sense unless expressly so defined herein. Optionally, the terms defined in the disclosure should not be interpreted to exclude the embodiments of the disclosure.

A hardware-based approach is described for example in the various embodiments of the disclosure described hereinafter. However, since the various embodiments of the disclosure may include techniques in which hardware and software are both used, a software-based approach and a combined hardware-software-based approach are not excluded from the embodiments of the disclosure.

In addition, although the disclosure describes various embodiments using terms used in various communication standards (e.g., 3^{rd} Generation Partnership Project (3GPP)), this is for example purposes only. Various embodiments of the disclosure may be easily modified and applied to other communication systems.

Hereinafter, various example embodiments of the disclosure are described.

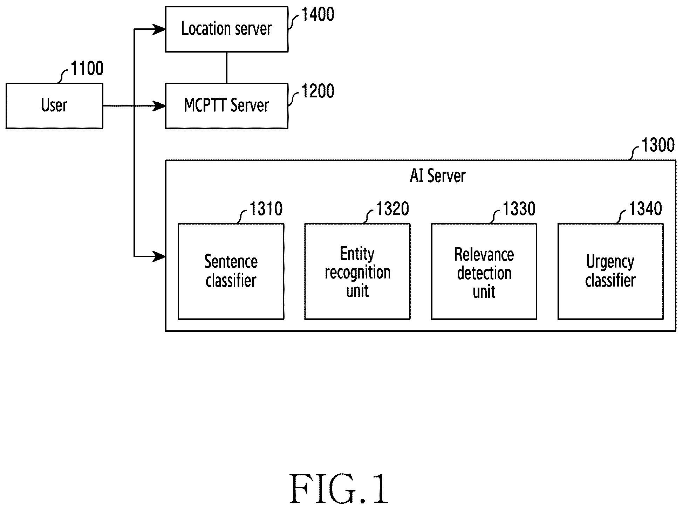

FIG. 1 illustrates an example apparatus for providing a Mission Critical Push To Talk (MCPTT) service (hereinafter, an "MCPTT apparatus") according to various embodiments of the disclosure.

An MCPTT apparatus may include an MCPTT server 1200, an Artificial Intelligence (AI) server 1300, and a location server 1400. For example, the MCPTT apparatus may be constructed by combining the MCPTT server 1200, the AI server 1300, and the location server 1400. The AI server 1300 may include a sentence classifier 1310, an entity recognition unit 1320, a relevance detection unit 1330, and/or an urgency classifier 1340.

Although components such as the MCPTT server 1200, location server 1400, and AI server 1300 illustrated in FIG. 1 are expressed separately in concept, they do not necessarily represent physically separate servers. That is, the MCPTT apparatus may be implemented by physically combining the MCPTT server 1200, the location server 1400, and the AI server 1300, or, in various embodiments, may be implemented by being physically separated.

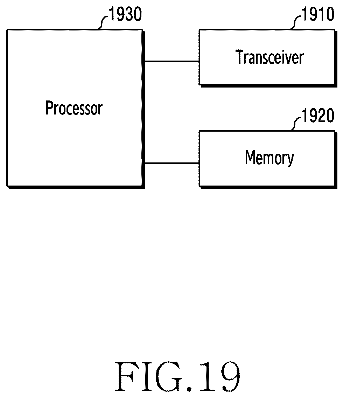

The components such as the MCPTT server 1200, location server 1400, and AI server 1300 described in FIG. 1 may, for example, correspond to an apparatus 1900 described in FIG. 19. The MCPTT apparatus may be expressed functionally and implemented by the components of FIG. 1, or may be implemented by hardware components such as a processor 1930, a transceiver 1910, a memory 1920, or the like as shown in FIG. 19.

A user equipment (UE, 1100) communicates with an MCPTT apparatus.

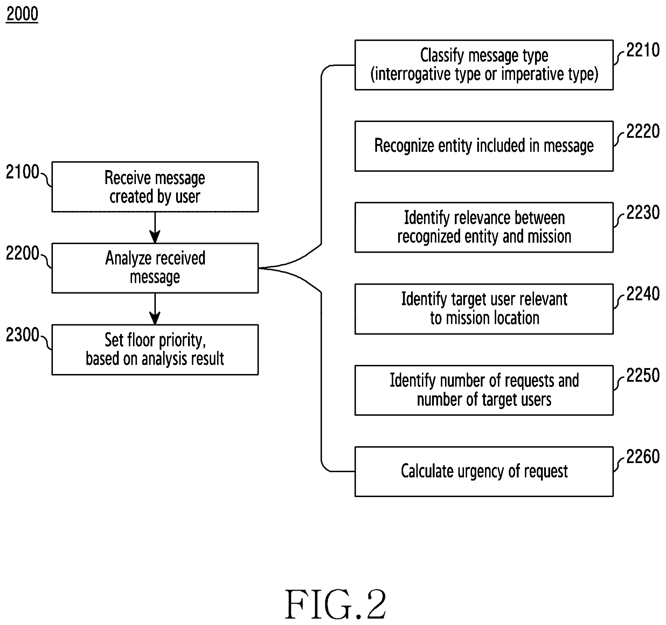

FIG. 2 illustrates an example method for providing an MCPTT service (hereinafter, an "MCPTT method" 2000) according to various embodiments of the disclosure. The method described in FIG. 2 may operate, for example, using the MCPTT apparatus of FIG. 1.

Referring to FIG. 2, the MCPTT method 2000 includes an operation 2100 of receiving a message created by a user, an operation 2200 of analyzing the received message, and an operation 2300 of setting a floor priority, based on an analysis result.

The operation 2100 of receiving a message created by the user may represent, for example, an operation of receiving a message created by any one user among a plurality of users included in a group. For example, when any one user requests another user to update a certain state, the MCPTT apparatus may receive a request message thereof.

The operation 2200 of analyzing the received message may represent, for example, an operation of analyzing content of the message created by any one user. For example, the operation 2200 of analyzing the received message may include an operation 2210 of classifying a type of the message (e.g., interrogative type or imperative type), an operation 2220 of recognizing an entity included in the message, an operation 2230 of identifying a relevance between the recognized entity and a mission, an operation 2240 of identifying a target user relevant to a mission location, an operation 2250 of identifying a number of requests and a number of target users, and/or an operation 2260 of calculating an urgency of a request. The operation 2200 of analyzing the message may be performed, for example, by the AI server 1300 of FIG. 1.

The operation 2210 of classifying the type of the message may classify whether the message is an interrogative type or an imperative type. That is, it is possible to classify whether a corresponding message is a message giving a command from one user to another user or a message asking a question. The message may be analyzed by the operation 2210 of classifying the type, and an analysis result may be used as a basis for setting a user's floor priority in subsequent operations. The operation 2210 of classifying the type of the message may be performed, for example, by sentence classifier 1310 of FIG. 1.

The sentence classifier 1310 may classify the content of the message into a statement, a question, an exclamation, a command, etc., and may identify whether the message is an interrogative type or an imperative type. The operation of determining the type of the message may be performed by an AI model. For example, the AI model may perform data acquisition and formatting to apply deep learning, perform word embedding and data splitting, and classify the type of the message using a classifier such as Multiple Perception (MLP), Recurrent Neural Network (e.g., long short-term memory (LSTM)), Convolution Neural Network (CNN), FastText, etc., and learning may be achieved by a process of tuning a hyper parameter.

The operation 2220 of recognizing the entity included in the message may represent an operation of detecting entities indicated in the message. The entity may be a name or affiliation (or organization or specialty) of at least one of users belonging to the MCPTT group, or may include at least any one piece of name information.

An entity according to an embodiment may represent, for example, a name of a person (Sam, John, etc.) or a name of an object or location (Seoul, Suwon, etc.), or the like, or may represent a name of an occupation (such as a doctor, a firefighter, a paramedic, or a security guard) or affiliation, a specialty, or a group. By recognizing the entity included in the message, an additional analysis operation may be performed based on the recognized entity. For example, when the message is "Sam, report the latest situation of Suwon," the operation 2220 of recognizing the entity included in the message may extract "Sam" which is a name of a person and "Suwon" which is a name of a location. In addition, when the message is "Security guards who know the situation of building A, report the situation," the operation 2220 of recognizing the entity included in the message may detect the "security" which is a name of an affiliation or organization and the "building A" which is a name of a location, as the entity. The operation 2220 of recognizing the entity included in the message may be performed, for example, by entity recognition unit 1320 of FIG. 1. The operation 2220 of recognizing the entity included in the message may be performed when a corresponding message is identified as the interrogative or imperative type in the operation 2210.

The entity recognition unit 1320 may be based on an AI model. The following processes, for example, may be performed to train the AI model for recognizing the entity.

First, a text corpus is collected. The corpus may be a large-scale text collection representing a text type to be used by a Named Entity Recognition (NER) system. In addition, the corpus is annotated by a named entity. An operation of manually tagging a type (e.g., a person, an organization, a location, etc.) to the named entity of the corpus may be included. Next, a feature may be extracted from the corpus. In this case, an operation of identifying a feature which may be used to identify the named entity and a different word of a text may be included. A common feature may include capitalization of words, presence or absence of punctuation, surrounding words, or the like. In addition, a model is trained. This operation may be performed using various machine learning algorithms such as a support vector machine, a decision-making tree, a naive Bayes classifier, or the like. Next, the model is evaluated. The model may be evaluated for a text set for evaluating the model, thereby evaluating how well the name entity is identified.

The operation 2230 of identifying the relevance between the recognized entity and the mission represents an operation of identifying whether the recognized entity is relevant to the mission. For example, when the recognized entity is a name of a person, the relevance may be admitted if the entity is the same as a name of a user belonging to an MCPTT group. In addition, when the recognized entity is an affiliation or occupation name (a doctor, a solider, etc.), the relevance to the mission may be admitted if the entity corresponds to an affiliation belonging to the MCPTT group or a name of a group. In addition, when the recognized entity is relevant to a place in which the mission is performed, the relevance may be admitted. Therefore, even if many entities are detected in communication between users, only entities for which the relevance to the mission is admitted may be analyzed, which may result in an increase in efficiency of an analysis process. The operation 2230 of identifying the relevance between the recognized entity and the mission may be performed, for example, by the relevance detection unit of FIG. 1. The operation 2230 of identifying the relevance may consider whether the recognized entity is a user belonging to a current chat group, whether the user is in an online or active state in the current chat group, whether the user has left the chat group for a while, whether the user is in a covert mode, or whether the user is in a "do-not-disturb" mode, or the like. That is, whether there is relevance may be identified based on the user's state in the chat group. It may be identified that there is no relevance, when the recognized entity is a name of a person or when the person is not included in the chat group or is not in the online state, or is participating in a high priority call from another chat group, or has left the chat group, or is in the covert mode or in the do-not-disturb mode.

In various embodiments, whether a relevance (for example, a relevance between a recognized entity and the mission) is admitted or not may be determined based on specified criteria. There may be a plurality of criteria according to various circumstances. Specified criteria may be related to distance, a name of a user belonging to an MCPTT group, affiliation, or like. (as described in various embodiments disclosed herein) In one embodiment, The MCPTT apparatus may derive a value and determine relevance based on the value. Specifically, the value may represent a degree of relevance. If the value is greater than or equal to a specified value, it may be determined that relevance exists. Further, specified criteria may be pre-set considering the various situation. For determining relevance, known technique may be used.

The operation 2240 of identifying a target user relevant to a mission location may represent an operation of identifying a user located within a specific distance from the mission location, based on a location of the user. Location information of the user may be transmitted by each of users belonging to the MCPTT group to an MCPTT apparatus, and the MCPTT apparatus may receive the location information of the users to identify users close to the mission location. Specifically, the users may transmit the location information to the location server 1400 of FIG. 1, and the location server 1400 may transmit the location information of the users to the MCPTT server 1200 or AI server 1300 of FIG. 1. Thus, for example, the MCPTT server 1200 and/or the AI server 1300 may perform the operation 2240 of identifying target users relevant to the mission location.

The operation 2250 of identifying the number of requests and the number of users represents an operation of identifying the number of requests included in the message and the number of target users of a corresponding request. For example, when the message is "Sam, check the condition of building A. John, go to building B right now.", the number of requests included in the message is 2, and the number of target users for the requests is 2 (Sam and John). In addition, when the message is "Sam, check and report the condition of building A. Then, go to building B.", the number of requests included in the message is 2, and the number of target users for the requests is 1 (Sam). The operation 2250 of identifying the number of requests and the number of target users may, for example, be performed by the MCPTT server 1200 and/or AI server 1300 of FIG. 1.

The operation 2260 of calculating the urgency of the request represents an operation of calculating the urgency to recognize which request is more urgent among a plurality of requests. For example, when the message is "Sam, check the condition of building A. John, go to building B right now", if a request A is "check the condition of building A" and a request B is "go to building B right now", the request B is more urgent between the two requests. This is because the request B includes terms such as "now", "right", or the like, for indicating immediate execution. The operation 2260 of calculating the urgency of the request may calculate the urgency, based on terms indicating the urgency included in each of the requests, or may identify which request is more urgent among several requests. The operation 2260 of calculating the urgency of the request may be performed, for example, by urgency classifier 1340 of FIG. 1.

Meanwhile, the operation 2300 of setting the floor priority, based on the analysis result, represents an operation of setting a floor priority of users belonging to the MCPTT group, based on the analysis result based on the operation 2200. For example, when an entity recognized in the previous operation has relevance to the mission, a high floor priority may be set to a user relevant to the recognized entity. When the recognized entity is a name, the user relevant to the recognized entity may be a user having the name. When the recognized entity is relevant to a location, the user relevant to the recognized entity may be a user close to the location. In various embodiments, whether the user is close to the location or not may be determined based on a distance between the user and the location. For example, if the distance between the user and the location is lesser than a specified value, it may be determined that the user is close to the location. For another example, if the distance between the user and the location is greater than or equal to the specified value, it may be determined that the user is far from the location. The specified value may be determined based on various situation. In addition, when the recognized entity is an organization, an affiliation, or a specialty, the user relevant to the recognized entity may be a user belonging to the organization, the affiliation, or the specialty.

The MCPTT method or apparatus may notify users in a chat group that a specific user is assigned a highest floor priority for any period of time. When a current user releases a speech, the MCPTT method or apparatus may grant a floor to target users assigned the highest floor priority.

For example, when a user corresponding to a supervisor (or a team leader) among users creates a request message, and the request message is a message targeting a user A, a floor priority of the user A may be set to be high according to an analysis result. Therefore, even if different users are waiting according to waiting orders of a floor, the user A may communicate first before the different users. That is, the user A may perform communication by creating a corresponding message for the request message.

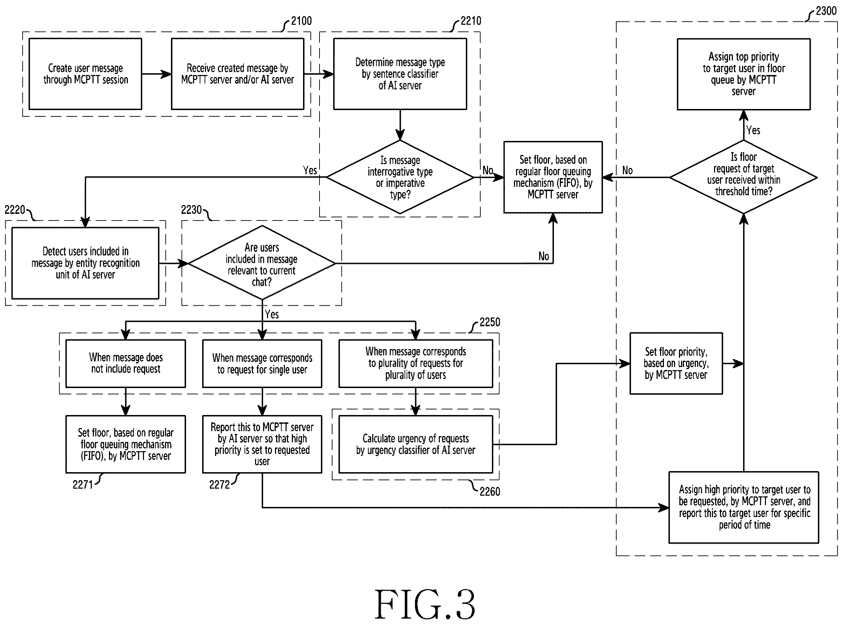

FIGS. 3, 4, 6, 7, and illustrate various example embodiments of an MCPTT method. Hereinafter, various embodiments are described with reference to these figures.

FIG. 3 illustrates an example method of providing an MCPTT service in detail according to various embodiments of the disclosure. Referring to FIG. 3, the MCPTT method may be implemented as follows.

Any one user among users belonging to an MCPTT group may create a user message through an MCPTT session. The created message may be a request message, and is transferred to an MCPTT server and/or an AI server. That is, an MCPTT apparatus may receive the message created by the user (operation 2100).

The received message may be analyzed by an analysis operation. First, whether the message is an imperative type or an interrogative type may be determined by a sentence classifier (operation 2210). The type of the message may be the interrogative type or the imperative type according to whether the message is for asking or commanding a specific user. For example, when the message is "Sam, is the fire suppression condition of building A complete?", the message may be classified as the interrogative type. For example, when the message is "Sam, report the fire suppression condition of building A," the message may be classified as the imperative type.

When the message is not classified as the imperative type or the interrogative type, the MCPTT server 1200 of FIG. 1 may set a floor through a regular floor queuing mechanism (FIFO). When the message is classified as the imperative type or the interrogative type, additional analysis operations may be performed. For example, the entity recognition unit of FIG. 1 may detect entities included in the message (operation 2220). Herein, the entity may include a name of a user. For example, when the message is "Sam, is the fire suppression condition of building A complete?", a name of a user "Sam", a name of a location, i.e., "building A", and a name such as "fire", "suppression", or the like may be recognized as the entity from the message.

In addition, whether there is relevance may be identified for recognized entities (operation 2230). When there isn't any relevance, the MCPTT server 1200 of FIG. 1 may set a floor through a regular floor queuing mechanism (FIFO). When "Sam" corresponds to one of users belonging to the MCPTT group, and the "building A" is relevant to a place of a mission, relevance may be admitted. A method of identifying relevance may be based on other various methods, and there may be a method of referring to context of the existing chat.

When relevance is admitted for the recognized entities, the number of requests included in the message and the number of target users to be requested may be identified (operation 2250). For example, when the message is "Sam, check the condition of building A. John, go to building B right now.", the number of requests is 2, and the number of target users to be requested is 2. For example, when the message is "Sam, is the fire suppression condition of building A complete?", the number of requests is 1, and the number of target users to be requested is 1.

As an analysis result based on the operation 2250, the message may be classified into a case of not including a request, a case of a request for a single user, and a case of a plurality of requests for a plurality of users.

When the message does not include the request, a floor priority of users may be set based on an existing method in operation 2271. For example, the MCPTT server 1200 of FIG. 1 may set a floor through a regular floor queuing mechanism (FIFO).

When the message is a request for a single user, a floor priority of a target user to be requested may be set to be high. For example, the AI server 1300 of FIG. 1 may transfer an analysis result to the MCPTT server 1200 in operation 2272, and the MCPTT server 1200 may set a floor priority of a target user to be high, based on the received analysis result (operation 2300). The MCPTT server 1200 may assign a high priority to the target user, and may report this to the target user for a specific period of time. When the target user requests for a floor within a threshold time (when a floor request of the target user is received by the MCPTT server within the threshold time), the MCPTT server may assign a top priority to the target user in a floor queue. That is, the floor priority of the target user may be set to the top priority.

When the message includes a plurality of requests for a plurality of users, an operation of calculating an urgency for each request may be performed (operation 2260). The operation of calculating the urgency may be performed, for example, by the AI server 1300 of FIG. 1. When the urgency is calculated for each of the requests, a floor priority of the target user may be set to be high for the request having a highest urgency. For example, the AI server 1300 of FIG. 1 may transfer an urgency analysis result to the MCPTT server 1200, and may set a high floor priority to a target user of an affiliation requested with a highest urgency, based on the received analysis result (operation 2300). In addition, when the target user requests for a floor within the threshold time (when the floor request of the target user is received by the MCPTT server within the threshold time), the MCPTT server 1200 may assign the top priority to the target user in the floor queue. That is, the floor priority of the target user may be set to the top priority. When the target user doesn't request for a floor within the threshold time, the MCPTT server 1200 of FIG. 1 may set a floor through a regular floor queuing mechanism (FIFO).

That is, when the recognized entity includes names of at least two users among users, the operation 2200 of analyzing the message in FIG. 2 may further include the operation 2260 of calculating the urgency of the requests included in the message. The operation 2300 of setting the floor priority of the users may set the floor priority, based on the calculated urgency.

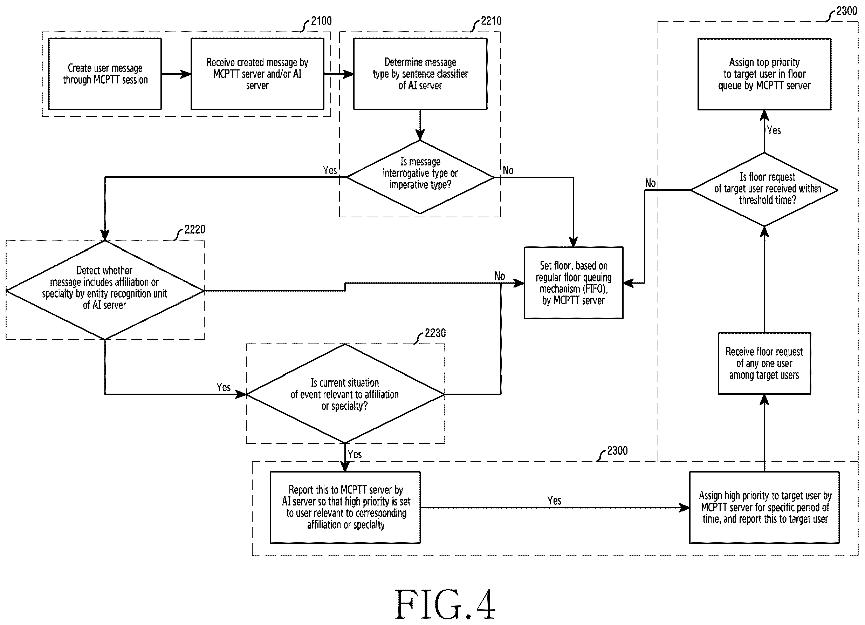

FIG. 4 illustrates an example method of providing an MCPTT service in detail according to various embodiments of the disclosure. Referring to FIG. 4, the MCPTT method may be implemented as follows.

Any one user among users belonging to an MCPTT group may create a message through an MCPTT session. The created user message may be a request message, and is transferred to an MCPTT server and/or an AI server. That is, an MCPTT apparatus may receive the message created by the user (operation 2100).

The received message may be analyzed by an analysis operation. First, whether the message is an imperative type or an interrogative type may be determined by a sentence classifier (operation 2210). The type of the message may be the interrogative type or the imperative type according to whether the message is for asking or commanding a specific user. For example, when the message is "Sam, is the fire suppression condition of building A complete?", the message may be classified as the interrogative type. In addition, when the message is "Sam, report the fire suppression condition of building A," the message may be classified as the imperative type.

When the message is not classified as the imperative type or the interrogative type, the MCPTT server 1200 of FIG. 1 may set a floor through a regular floor queuing mechanism (FIFO). When the message is classified as the imperative type or the interrogative type, additional analysis operations may be performed. For example, the entity recognition unit of FIG. 1 may detect entities included in the message (operation 2220). If the entity recognition unit fails to detect entities included in the message, the MCPTT server 1200 of FIG. 1 may set a floor through a regular floor queuing mechanism (FIFO). Herein, the entity may include a user's specialty, affiliation, group, organization, or the like. For example, when the message is "Firefighters, report whether the fire suppression condition of building A completes.", "firefighters" representing the user's specialty, "building A" which is a name of a location, and names such as "fire", "suppression", or the like may be recognized as entities from the message. The entity representing the user's specialty, affiliation, group, organization, or the like may be various, such as "doctor", "police", "soldier", or the like.

Next, if the message is detected to include an entity(ies), whether there is relevance may be identified for the recognized entities (operation 2230). When there isn't any relevance, the MCPTT server 1200 of FIG. 1 may set a floor through a regular floor queuing mechanism (FIFO). When "firefighter" corresponds to one of specialties of users belong to the MCPTT group, and a mission situation corresponds to fire, it may be admitted that the "firefighter" is relevant to the mission. A method of identifying the relevance may be based on various methods, and a specialty of users belonging to the MCPTT group, a feature of a mission, context of chat, or the like may be considered.

When relevance is admitted for the recognized entities, the AI server may transfer user information relevant to a corresponding affiliation or specialty to the MCPTT server. For example, when the number of users corresponding to "firefighter" is 3, the AI server may transfer information on 3 users who are the firefighters to the MCPTT server, and the MCPTT server may assign a high priority to the users who are the firefighters (operation 2300). In this case, the MCPTT server may report this to target users assigned a high priority for a specific period of time, and when the target user requests for a floor within a threshold time (when a floor request of the target user is received by the MCPTT server within the threshold time), may assign a top priority to the target user in a floor queue (operation 2300).

Therefore, the firefighters may have an opportunity to speak earlier than (or before) users having other specialties.

Meanwhile, an embodiment of FIG. 4 may include identifying whether there are a plurality of requests as in the embodiment of FIG. 3. For example, when the message is "Firefighters, check the condition of building A, and medical personnel, go to building B right now", the number of requests is 2, and the number of types of affiliations (or specialties) to be requested is 2. As such, when the message includes a plurality of requests for a plurality of affiliations, an operation of calculating an urgency may be performed for each request, and when the urgency for each of the requests is calculated, a floor priority of corresponding affiliated users may be set to be high for a request having a highest urgency. The AI server 1300 of FIG. 1 may transfer an urgency analysis result to the MCPTT server 1200, and may set a high floor priority to a target user of an affiliation requested with a highest urgency, based on the received analysis result (operation 2300). In addition, when the target user requests for a floor within a threshold time (when a floor request of the target user is received by the MCPTT server within the threshold time), the MCPTT server 1200 may assign a top priority to the target user in a floor queue.

A Mutual Aid Group (MAG) may be one function of Mission Critical Push-to-Talk (MCPTT) which allows several public safety agencies to communicate and collaborate with each other in an emergency situation. The MAG may operate in such a manner that a shared communication channel is created between several agencies to communicate with each other on a real-time basis. The MAG may be created when a group owner, usually a public safety agency, invites another agency to join a group. When the agency joins the group, communication may be achieved using an MCPTT service.

In the MAG, each agency may communicate with not only its own group members but also other agencies in a group. This may enable a coordinated response between agencies and improve situation recognition. In addition, a MAG owner may set an access control and permission to allow an authorized agency to join a group and access a shared communication channel. The MAG is a function capable of providing a reliable and safe communication service to a public safety agency. The several agencies communicate and cooperate effectively in an emergency situation using the MAG for a quicker and more effective response.

In addition, a MAG may be implemented by an apparatus and method according to various embodiments of the disclosure.

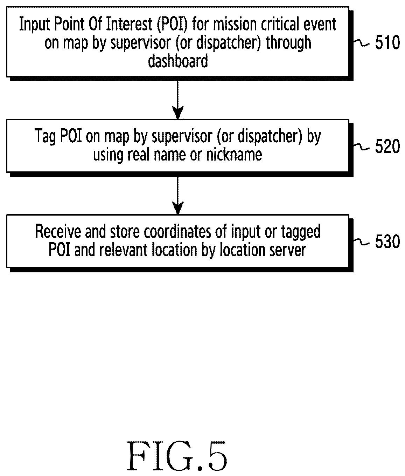

FIG. 5 illustrates an example method in which a dispatcher (or a supervisor) sets location information to provide an MCPTT service according to various embodiments of the disclosure.

Referring to FIG. 5, a mission-related place (e.g., a Point Of Interest (POI)) may be input on a map by a supervisor (or the dispatcher) through a dashboard in an apparatus or method according to an embodiment of the disclosure (operation 510). In addition, the place may be tagged on the map by the supervisor (or the dispatcher) using a real name or a nickname (operation 520). A location server (see FIG. 1) may receive location coordinates of the tagged place or a corresponding place (POI), and may store the location coordinates (operation 530).

The supervisor (or the dispatcher) may be any one of users belonging to an MCPTT group. The supervisor may add or tag the mission-related place on the map using the dashboard, and the location coordinates for the place added or tagged by the supervisor may be transmitted to and stored in an apparatus according to an embodiment of the disclosure. Therefore, coordinates of a mission-related location may be used to provide the MCPTT service.

The supervisor (or the dispatcher) may update the POI on the mission-related map. When the POI is set, coordinates of the POI may be stored in the location server. A name of the POI may be set to a real name or a nickname.

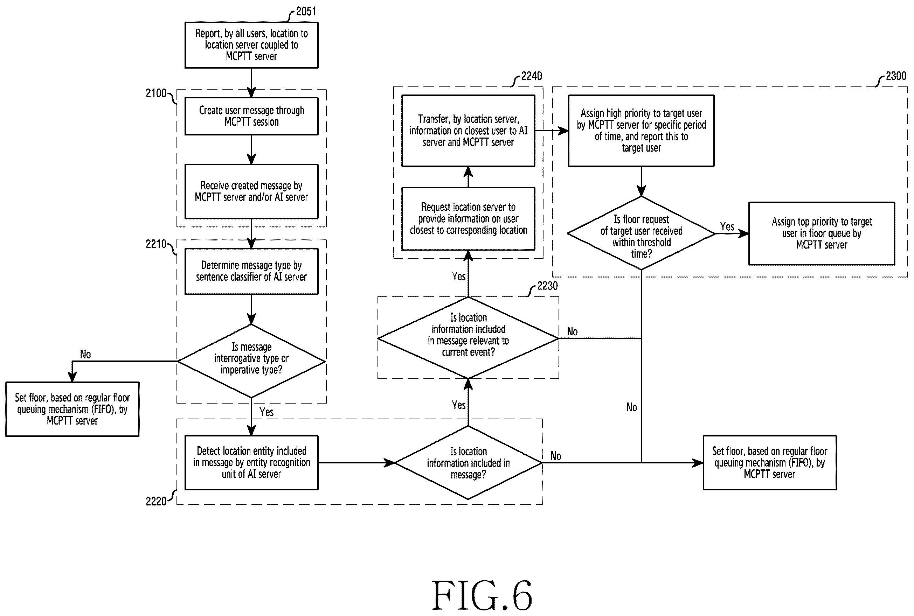

FIG. 6 illustrates an example method of providing an MCPTT service in detail according to various embodiments of the disclosure. Referring to FIG. 6, an MCPTT method based on location information may be implemented as follows.

In operation 2051, users belonging to an MCPTT group may transfer individual location information to a location server (see FIG. 1). That is, an MCPTT apparatus may perform an operation of receiving location information of the users.

Any one user among the users belonging to the MCPTT group may create a message through an MCPTT session. The created message may be a request message, and the request message is transferred to an MCPTT server and/or an AI server. That is, the MCPTT apparatus may receive the message created by the user (operation 2100), and may receive the location information of the user.

The received message may be analyzed by an analysis operation. First, whether the message is an imperative type or an interrogative type may be determined by a sentence classifier (operation 2210). The type of the message may be the interrogative type or the imperative type according to whether the message is for asking or commanding a specific user (or an affiliation). For example, when the message is "Sam, is the fire suppression condition of building A complete?", the message may be classified as the interrogative type. For example, when the message is "Sam, report the fire suppression condition of building A," the message may be classified as the imperative type.

When the message is not classified as the imperative type or the interrogative type, the MCPTT server 1200 of FIG. 1 may set a floor through a regular floor queuing mechanism (FIFO). When the message is classified as the imperative type or the interrogative type, additional analysis operations may be performed. For example, the entity recognition unit of FIG. 1 may detect entities included in the message (operation 2220). Herein, the entity may include a location-related entity. For example, when the message "Users close to Suwon, report the condition of injured people," "Suwon" representing a location may be recognized as the location-related entity from the message. The entity representing the location may include a place name such as "Seoul" or "Suwon", or may include, for example, a name of a bus stop or subway station, a building, or a specific zone.

Next, if location information is included in the message, whether there is relevance may be identified for recognized entities (operation 2230). When the recognized location entity is relevant to a place in which a mission is performed, relevance may be admitted. A method of identifying whether there is a relevance to the entity may be based on various methods, and location (e.g., POI) information added by a supervisor, a specialty of users belonging to an MCPTT group, a feature of a mission, context of chat, or the like may be considered. For example, when the message is "The tower was patrolled last week.", since this refers to a fact that occurred in the past, it may be identified that there is no relevance to the current mission.

The operation 2230 of identifying the relevance to the mission with respect to the recognized entity may compare a location corresponding to the recognized location entity and a location of a mission place. When the location corresponding to the recognized location entity is close to the mission place or belongs to the mission place, relevance may be admitted. The location of the mission place may be received from any one user among the users in the MCPTT group. For example, as discussed in FIG. 5, a supervisor (or a dispatcher) may set a place tagged through a dashboard as the mission place. Alternatively, the mission place may be pre-set.

When relevance to the mission is admitted with respect to the recognized entities, a target user relevant to the mission location is identified (operation 2240). For example, the MCPTT server (or the AI server) may request the location server to provide information on a user closest to a place indicated by the recognized entity, and the location server may transfer information (a list) for the user closest to the place to the MCPTT server and/or the AI server. Therefore, the MCPTT server may set a floor priority of a target user closest to the place to be high. Specifically, the MCPTT server may set the floor priority of the target user to be high for a specific period of time, and may report this to the target user. When the target user requests for a floor within a threshold time (when a floor request of the target user is received by the MCPTT server within the threshold time), the MCPTT server may assign a top priority to the target user in a floor queue. That is, a method of providing an MCPTT service according to an embodiment may set a floor priority for a specific user to be high based on location information. Therefore, when the target user requests for a speech, a floor may be granted to the target user when a current user releases the speech.

That is, when the recognized entity includes name information for the location in the operation 2220, the operation 2200 of analyzing the message may calculate or determine a user closest to a place (or a location) corresponding to the name information among the users, based on location information of the users (operation 2240). In addition, the operation 2300 of setting a floor priority of the users may set a high floor priority to the user closest to the place.

If the message is "report about the zone A", the MCPTT method or apparatus may automatically set a floor priority of a user close to the zone A to be high. Therefore, the user does not have to request for a report after identifying who is in the zone A.

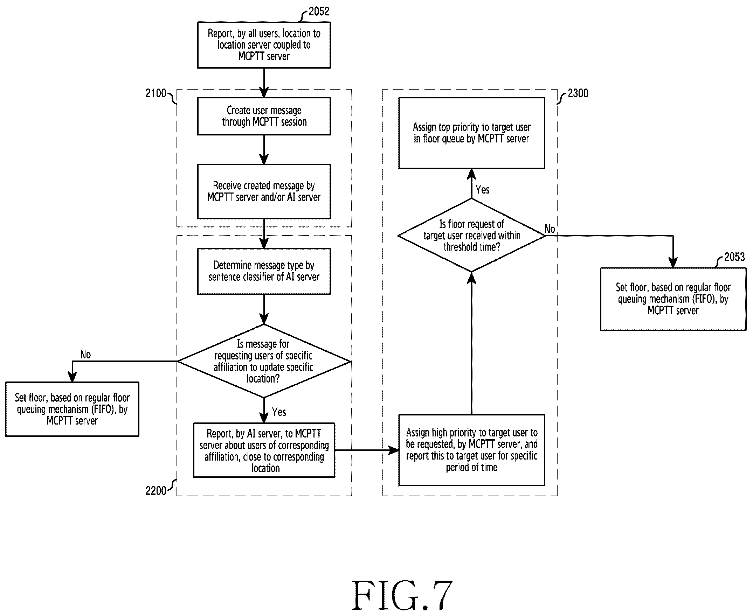

FIG. 7 illustrates an example method of providing an MCPTT service in detail according to various embodiments of the disclosure. Referring to FIG. 7, an MCPTT method based on location information may be implemented as follows.

In operation 2052, users belonging to an MCPTT group may transfer individual location information to a location server (see FIG. 1). That is, an MCPTT apparatus may perform an operation of receiving location information of the users.

In addition, any one user among the users belonging to the MCPTT group may create a message through an MCPTT session. The created message may be a request message, and the request message is transferred to an MCPTT server and/or an AI server. That is, the MCPTT apparatus may receive the message created by the user (operation 2100), and may receive the location information of the user.

In operation 2200, the received message may be analyzed by an analysis operation. First, whether the message is an imperative type or an interrogative type may be determined by a sentence classifier. The type of the message may be the interrogative type or the imperative type according to whether the message is for asking or commanding a specific user (or an affiliation). For example, when the message is "Sam, is the fire suppression condition of building A complete?", the message may be classified as the interrogative type. In addition, when the message is "Users close to Suwon, report the condition of building A," the message may be classified as the imperative type.

When the message is classified as the imperative type or the interrogative type, additional analysis operations may be performed. For example, the AI server 1300 of FIG. 1 may identify whether content of the message requests a specific user to update a specific location. The AI server 1300 may identify the content of the message by analyzing recognized entities as in the aforementioned embodiments. When the content of the message doesn't request users of a specific affiliation to update the specific location, the MCPTT server 1200 of FIG. 1 may set a floor through a regular floor queuing mechanism (FIFO). When the content of the message requests users of a specific affiliation to update the specific location, the AI server 1300 may transfer information on the users of the specific affiliation, close to the specific location, to the MCPTT server. For example, when the message is "Medical personnel close to the zone A, update the condition of injured people", the AI server 1300 may transfer information on users corresponding to the medical personnel close to the zone A to the MCPTT server. A reference distance for identifying whether it is close to the zone A and the number of target users may be set by considering a feature of a mission. In order to identify users close to a specific location, a location server may transfer location information of the users to the AI server or the MCPTT server.

In operation 2300, the MCPTT server may assign a high floor priority to target users of a specific affiliation, close to a specific location, for a specific period of time, and may report this to the target users. When the target user requests for a floor within a threshold time (when a floor request of the target user is received by the MCPTT server within a threshold time), the MCPTT server may set a top priority to the target user in a floor queue.

When the target user does not request for the floor within the threshold time, the MCPTT server may follow the existing priority setting scheme in operation 2053. For example, the MCPTT server 1200 of FIG. 1 may set a floor through a regular floor queuing mechanism (FIFO).

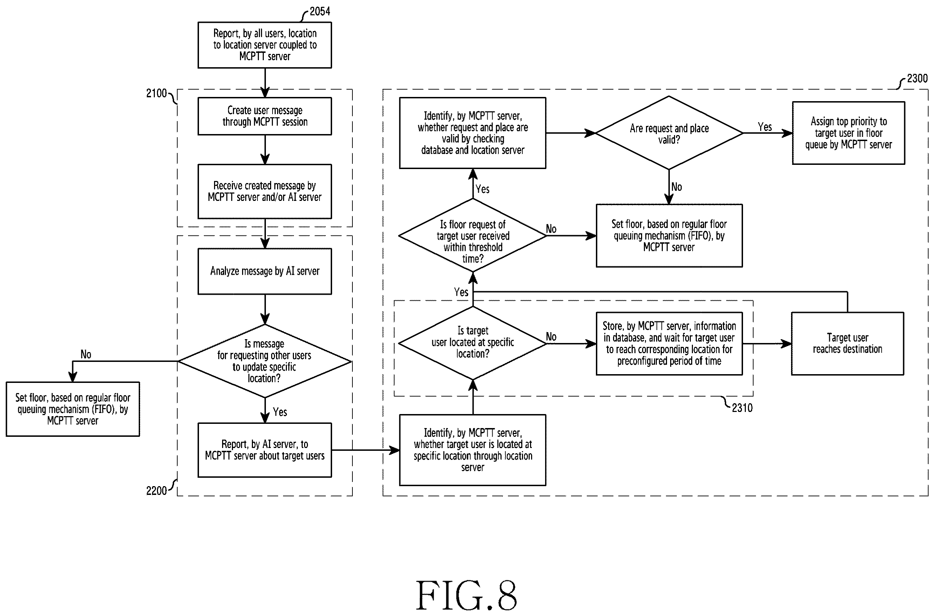

FIG. 8 illustrates an example method of providing an MCPTT service in detail according to various embodiments of the disclosure. Referring to FIG. 8, an MCPTT method based on location information may be implemented as follows.

In operation 2054, users belonging to an MCPTT group may transfer individual location information to a location server (see FIG. 1). That is, an MCPTT apparatus may perform an operation of receiving location information of the users.

In addition, any one user among the users belonging to the MCPTT group may create a message through an MCPTT session. The created message may be a request message, and the request message is transferred to an MCPTT server and/or an AI server. That is, the MCPTT apparatus may receive the message created by the user (operation 2100), and may receive the location information of the user.

In operation 2200, the received message may be analyzed by an analysis operation. First, whether the message is an imperative type or an interrogative type may be determined by a sentence classifier. The type of the message may be the interrogative type or the imperative type according to whether the message is for asking or commanding a specific user (or an affiliation). For example, when the message is "Sam, is the fire suppression condition of building A complete?", the message may be classified as the interrogative type. For example, when the message is "Users close to Suwon, report the condition of building A," the message may be classified as the imperative type.

When the message is classified as the imperative type or the interrogative type, additional analysis operations may be performed. For example, the AI server 1300 of FIG. 1 may identify whether content of the message requests a specific user to update a specific location. The AI server 1300 may identify the content of the message by analyzing recognized entities as in the aforementioned embodiments. When the content of the message doesn't request the specific user to update the specific location, the MCPTT server 1200 of FIG. 1 may set a floor through a regular floor queuing mechanism (FIFO). When the content of the message requests the specific user to update the specific location, the AI server 1300 may transfer information on the specific user to the MCPTT server. For example, when the message is "Sam, update the condition of injured people of zone A", the AI server 1300 may transmit information on a target user "Sam" to the MCPTT server. That is, when the recognized entity includes name information (a location entity) for a location and name information of a specific user, the AI server may transmit the name information for the location and the name information of the specific user to the MCPTT server.

In addition, in operation 2300, the MCPTT server may request the location server to provider location information of a specific user, and may receive the location information from the location server to identify whether the specific user is close to a specific location (operation 2310). That is, the operation 2300 of setting the floor priority of the users may further include, for example, an operation 2310 of identifying whether the specific user is close to a location corresponding to a location entity. A reference distance for identifying whether the specific user is close to the specific location may be set.

When the specific user is close in distance to the specific location, the MCPTT server may set a floor priority of a target user to be high. In addition, the MCPTT server may report that a high floor priority is set to the target user. When the target user requests for a floor within any time (e.g., when a floor request of the target user is received by the MCPTT server within a threshold time), the MCPTT server may identify whether a request and a place are valid, and if they are valid, may set a top priority to a floor of the target user in a queue. When a floor request of target user is not received within threshold time or when the request or place is not valid, the MCPTT server 1200 of FIG. 1 may set a floor through a regular floor queuing mechanism (FIFO).

Meanwhile, when the specific user is far in distance from the specific location, the MCPTT server may store information and wait for the specific user to reach the specific location. That is, the MCPTT server may store a message or information on a specific user or the like, and may periodically identify a location of the specific user to identify whether the user is close to the specific location. Thereafter, upon identifying that the specific user is close to or reaches the specific location, the MCPTT server may set a floor priority of a target user to be high. In addition, the MCPTT server may report that a high floor priority is set to the target user. When the target user requests for a floor within any time, the MCPTT server may identify whether a request and a place are valid, and if they are valid, may set a top priority to a floor of the target user in a queue.

Alternatively, when the specific user reaches the specific location and thus requests for a floor, while waiting until the specific user is close to the specific location, the MCPTT server may identify whether the request and the place are valid by checking a database. In addition, when the request and the place are valid, a floor priority for the target user may be set to a top priority.

That is, when the user is far from a location corresponding to the recognized location entity, location information corresponding to the recognized location entity may be stored. When a specific user requests for a floor, a floor priority of the specific user may be set by identifying whether the location of the specific user is close to the location corresponding to the location entity.

Therefore, a method of providing an MCPTT service according to an embodiment may adjust a floor priority appropriately to a situation even when a user's location information changes.

For example, when the message is "Report the patient's condition immediately when you reach the hospital", the sentence "when you reach the hospital" represents a condition, "you" represents a target, and "hospital" represents a place. A method and apparatus for providing an MCPTT service according to an embodiment of the disclosure do not assign a high priority to a target user when the condition "when you reach the hospital" is not satisfied. Therefore, location information of the user and hospital may be used to identify whether the condition is satisfied.

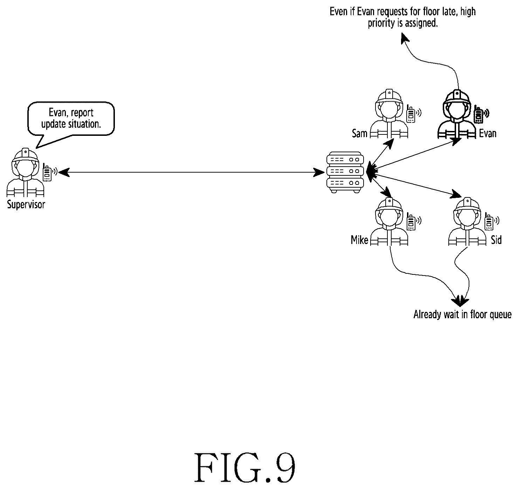

Hereinafter, FIGS. 9, 10, 11, 12, and 13 illustrate examples and effects according to the aforementioned embodiments.

FIG. 9 illustrates an example of applying an MCPTT service according to various embodiments of the disclosure.

Referring to FIG. 9, a supervisor creates a message "Evan, report update situation". In this case, a floor of a user whose name is Evan may have a high priority among users belonging to an MCPTT group.

A result illustrated in FIG. 9 may be derived by the method illustrated in FIG. 3. For example, the message "Evan, report update situation" may be created from the supervisor who is one of the users belonging to the MCPTT group, and an MCPTT apparatus may receive this message (operation 2100). In addition, upon identifying a type of the message (operation 2210), the message may correspond to an interrogative type. When an entity recognition unit detects users included in the message (operation 2220), an entity "Evan" may be recognized. Upon identifying relevance to the recognized entity (operation 2230), relevance is admitted since "Evan" is one of the users belonging to the MCPTT group. In addition, since the message corresponds to a request for a single user (i.e., "Evan"), the MCPTT apparatus may set a floor priority of Evan to a top priority.

Therefore, even in a state in which other users (e.g., Mike and Sid) in the same MCPTT group are already in the floor queue, Evan may have a top priority when Evan requests for a floor.

If Evan is in a state of a covert mode, since it is not a state where Evan is able to respond immediately, a floor priority may not be high.

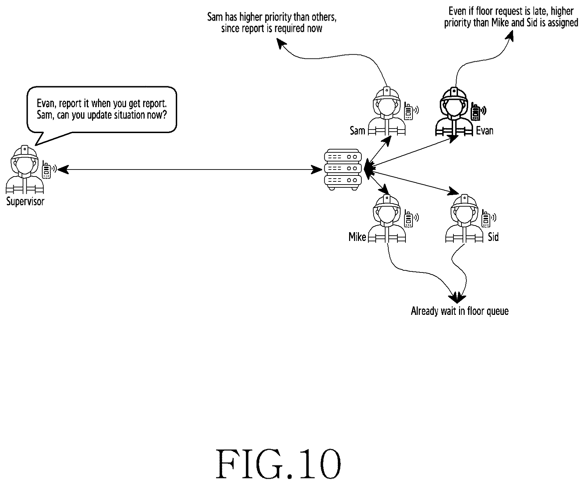

FIG. 10 illustrates an example of applying an MCPTT service according to various embodiments of the disclosure.

Referring to FIG. 10, a supervisor creates a message "Evan, report it when you get report. Sam, can you update situation now?". In this case, a user whose name is Sam may have a highest floor priority among users belonging to an MCPTT group. In addition, Evan may have a higher floor priority than Mike and Sid.

A result illustrated in FIG. 10 may be derived by the method illustrated in FIG. 3. For example, the message "Evan, report it when you get report. Sam, can you update situation now?" includes a request of "Evan, report it when you get report" and a request of "Sam, can you update situation now?". That is, the message includes a plurality of requests for Evan and Sam. Therefore, the MCPTT apparatus may identify that the message corresponds to a plurality of requests for a plurality of users in operation 2250, and may calculate an urgency for the requests in operation 2260. A result of calculating the urgency shows that an immediate update is requested since the request for Sam uses a term "now". Therefore, the request for Sam has a higher urgency than the request for Evan, and the MCPTT apparatus may set a floor priority of Sam to be higher than Evan and other users. In addition, the MCPTT apparatus may set a floor priority of Evan to be higher than other users, i.e., Mike and Sid.

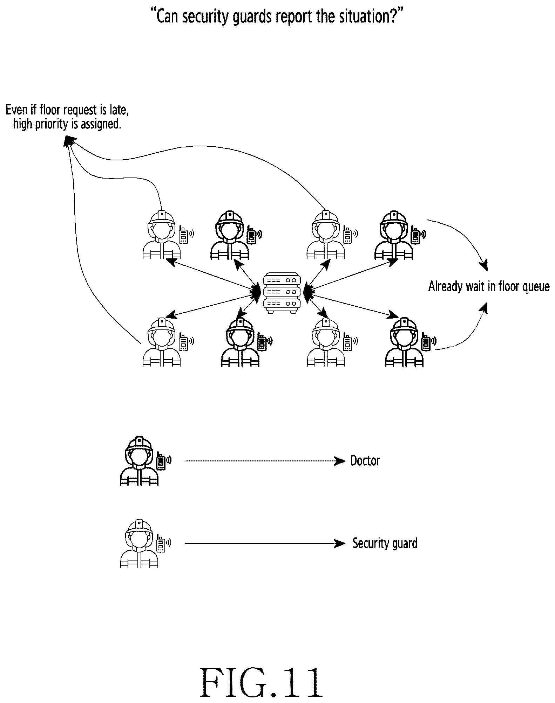

FIG. 11 illustrates an example of applying an MCPTT service according to various embodiments of the disclosure.

Referring to FIG. 11, an example of setting a floor priority to users belonging to a specific affiliation is described. In FIG. 11, security has a higher floor priority than a doctor.

A result illustrated in FIG. 11 may be derived by the method illustrated in FIG. 4. For example, in case of a message "Can security guards report the situation?", it is identified in operation 2210 that a type of the message is an interrogative type. In addition, an entity "security" representing a user's affiliation or specialty may be detected from the message in operation 2220. In addition, since the entity "security" is a specialty of a user in the MCPTT group, relevance may be admitted in operation 2230. Therefore, a floor priority of users having the specialty of "security" may be set to be high. Eventually, even if a "doctor" is already present in a floor queue, the floor priority of the users corresponding to "security" (e.g., a security guard) may be set to a top priority.

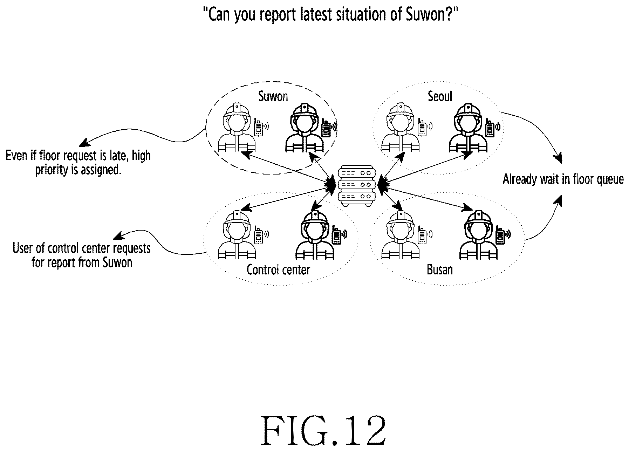

FIG. 12 illustrates an example of applying an MCPTT service according to various embodiments of the disclosure.

Referring to FIG. 12, an example of setting a floor priority, based on location information, is described. In FIG. 12, users located in a region "Suwon" have a higher floor priority than users located in other regions.

A result illustrated in FIG. 12 may be derived by the method illustrated in FIG. 6. For example, in case of a message "Can you report the latest situation of Suwon?", it is identified in operation 2210 that a type of the message is an interrogative type. In addition, an entity "Suwon" representing a place is detected from the message in operation 2220. Whether the entity "Suwon" is relevant to a mission is identified in operation 2230. If it is relevant to the mission, a floor priority may be set to be high for a user close to "Suwon" in operation 2300. Therefore, as shown in FIG. 12, even if users located in "Seoul" and "Busan" are already in a floor queue, a higher floor priority may be set to users located in "Suwon".

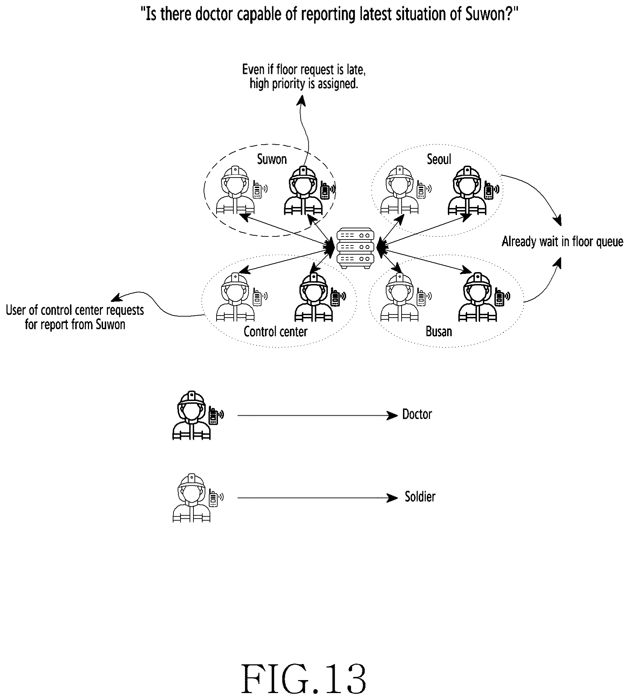

FIG. 13 illustrates an example of applying an MCPTT service according to various embodiments of the disclosure.

Referring to FIG. 13, an example of setting a floor priority, based on an entity representing a specialty and an entity representing a location, is described. FIG. 13 illustrates that, regarding a message "Is there doctor capable of reporting latest situation of Suwon?", a highest floor priority is set to a "doctor" close to "Suwon".

A result illustrated in FIG. 13 may be derived by the method illustrated in FIG. 7. For example, regarding the message "Is there a doctor capable of reporting the latest situation of Suwon?", the message is received in operation 2100. The message is analyzed in operation 2200. The message may be identified as an interrogative type according to the aforementioned operation 2210 of FIG. 2. Whether the message is for requesting users of a specific affiliation to update a specific location may be identified in operation 2200. In case of the message "Is there a doctor capable of reporting the latest situation of Suwon?", it is a message for requesting for an update of "Suwon" to the users corresponding to the "doctor". Therefore, an AI server may identify information on a user close to the "Suwon" and belonging to the "doctor", and may transmit information to an MCPTT server. The MCPTT server may assign a high floor priority to a target user close to the "Suwon" and belonging to the "doctor" for a specific period of time, and may report this to the target user. In addition, upon receiving a floor request of the target user within a threshold time, the MCPTT server may assign a top priority to the floor priority of the target user.

Referring to FIG. 13, users close to "Suwon" include one soldier and one doctor, and a high floor priority may be assigned only to a user corresponding to a doctor. Therefore, even if the location is close to "Suwon," the high floor priority is not assigned to a military affiliated user. In addition, even if the affiliation is the "doctor", the high floor priority is not assigned to users located in "Seoul" or "Busan".

That is, even if users located in other places are already in a floor queue, a user who is a "doctor" and located in "Suwon" may have a top priority as the floor priority.

For example, a user 1 and a user 2 are police officers patrolling zones A to D, a user 3 is a paramedic located in the zone A, and a message is "Can you update the security situation of zone A?". At this point, the user 1 is located in the zone A, and the user 2 is located in the zone D. In this case, since the message is associated with the "security," the users 1 and 2 who are police officers are related, and since the user 1 is located in the zone A, a high floor priority may be set to the user 1.

A supervisor may create a message without having to identify a user's affiliation and which user is located at a location relevant to a mission, and a floor priority may be automatically set for the users.

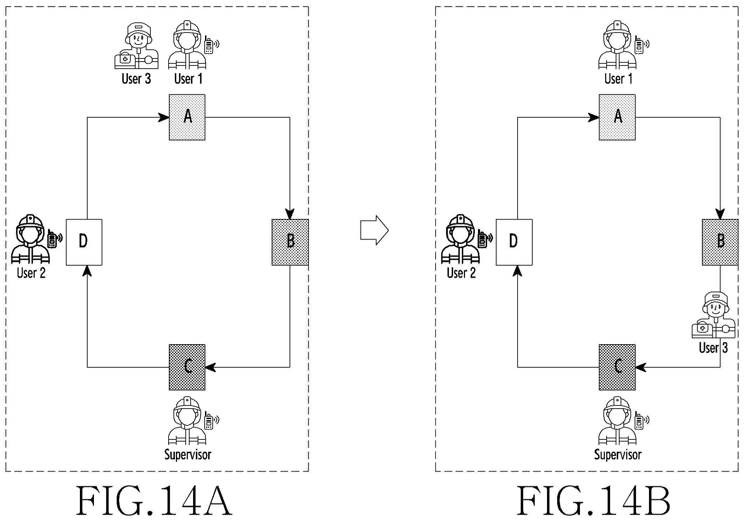

FIG. 14 illustrates an example of applying an MCPTT service according to various embodiments.

Referring to FIG. 14, an example of setting a floor priority, based on a user's location change, is described.

When a supervisor requests a user 1 to report a situation when located in a zone B, a floor priority of the user 1 is not set to be high in FIG. 14A since the user 1 is in a zone A. However, an MCPTT apparatus may store information in a database and periodically identify a location of the user 1. In FIG. 14B, the user 1 is still located in the zone A, and a user 3 is located in the zone B. Since the location of the user 1 is still zone A, the floor priority of the user 1 is not set to be high. Therefore, when the user 3 requests for a floor in FIG. 14B, the MCPTT server may identify the location of the user 1 and the information stored in the database, and since the location of the user 1 is still the zone A, the floor priority may be assigned to the user 3 according to the existing priority setting scheme.

When the user 1 moves to the zone B, the MCPTT server may identify the information stored in the database and the location of the user 1, at the request of the user 1 for the floor. When the information stored in the database is valid and the user 1 is located close to the zone B, the MCPTT server (or the MCPTT apparatus) may set the floor priority of the user 1 to a top priority.

That is, the MCPTT apparatus may periodically identify the location of the user 1, and may identify the location of the user 1 at the request of the user 1 for the floor.

In FIG. 14B, the user 1 is still located in the zone A, and the user 3 is located in the zone B. Since the location of the user 1 is still the zone A, the floor priority of the user 1 is not set to be high. Therefore, when the user 3 requests for the floor in FIG. 14B, the MCPTT server may identify the location of the user 1 and the information stored in the database, and since the location of the user 1 is still the zone A, the floor priority may be assigned to the user 3 according to the existing priority setting scheme. The existing priority setting scheme may be a scheme of granting the floor preferentially to a user who first requests for the floor.

If the supervisor requests the user 3 to report a situation when located in the zone B, a floor priority of the user 3 is not set to be high in FIG. 14A since the user 3 is located in the zone A. Therefore, if the user 1 is communicating, since the user 3 is not yet close to the zone B, the floor priority of the user 3 is not set to be higher than the user 1. Therefore, there is no concern that the floor priorities of the user 1 and the user 3 unnecessarily interfere with other. However, the MCPTT apparatus may store information (e.g., information on a message) in a database and periodically identify the location of the user 3, or may identify the location of the user 3 at the request of the user 3 for the floor.

In FIG. 14B, the user 1 is still located in the zone A, and the user 3 is located in the zone B. Since the location of the user 3 is close to the zone B, the floor priority of the user 3 may be set to be high. Therefore, when the user 3 requests for the floor in FIG. 14B, the MCPTT server may identify the location of the user 3 and the information stored in the database, and since the location of the user 3 is close to the zone B, a high floor priority may be assigned to the user 3. Since the floor priority of the user 3 is set to a top priority, the MCPTT server may communicate with the user 3 with the top priority when communication with the user 1 ends.

A result illustrated in FIGS. 14A and 14B may be derived by the method illustrated in FIG. 8. The operation 2200 of FIG. 8 may identify that a message is a message for requesting a specific user (e.g., the user 1) to update a specific location (e.g., the zone B). The operation 2310 of FIG. 8 identifies whether the user 1 is close to the zone B. When the user 1 is not located close to the zone B, the MCPTT server may store information (e.g., information on a message) in a database, and may wait for the user 1 to reach the zone B for any period of time. When the user 1 reaches close to the zone B and requests for the floor, the MCPTT server may identify the location of the user 1 and the information stored in the database, and, if it is valid, may set the floor priority of the user 1 to the top priority. The information stored in the database may include information on an analysis result of a request message. For example, a recognized entity, a reception time of the request message, location information of a target user, or the like may be included in the request message.

A floor of a specific user who has reached a specific location is automatically assigned a top priority without a supervisor having to identify whether the specific user reaches the specific location. Therefore, communication may be efficiently performed within a group for performing a mission.

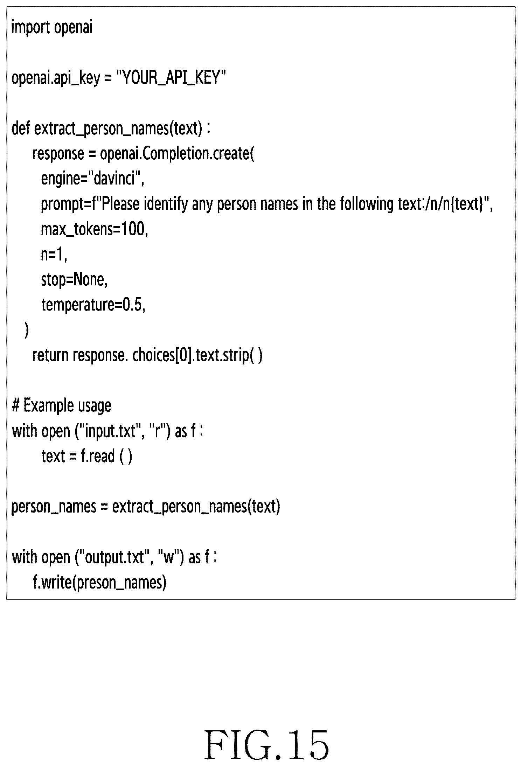

FIG. 15 illustrates an example name entity recognition algorithm for an MCPTT service according to various embodiments of the disclosure. The entity recognition unit 1320 of FIG. 1 may recognize entities for a name (e.g., Sam, Evan, etc.) included in a message, based on the algorithm described in FIG. 15.

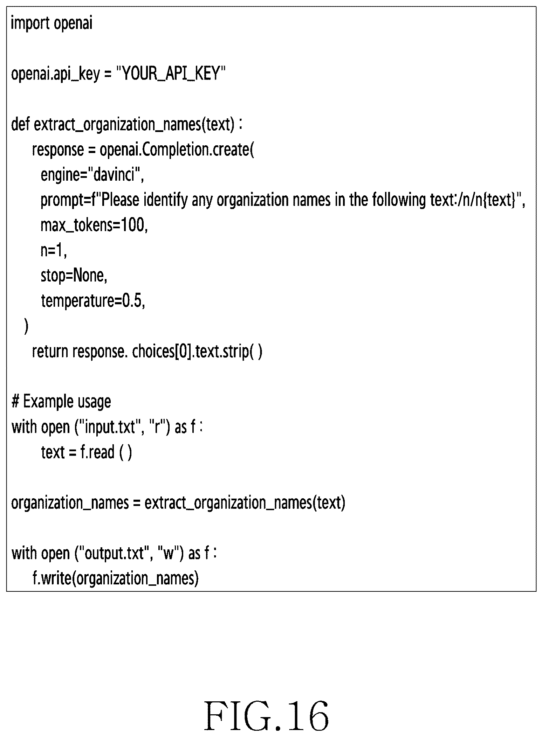

FIG. 16 illustrates an example organization (or affiliation, specialty) entity recognition algorithm for an MCPTT service according to various embodiments of the disclosure. The entity recognition unit 1320 of FIG. 1 may recognize entities for the affiliation included in a message, based on the algorithm described in FIG. 16. For example, entities representing the user's affiliation or user's specialty such as "police," "soldier," "firefighter," "medical personnel," etc., may be recognized.

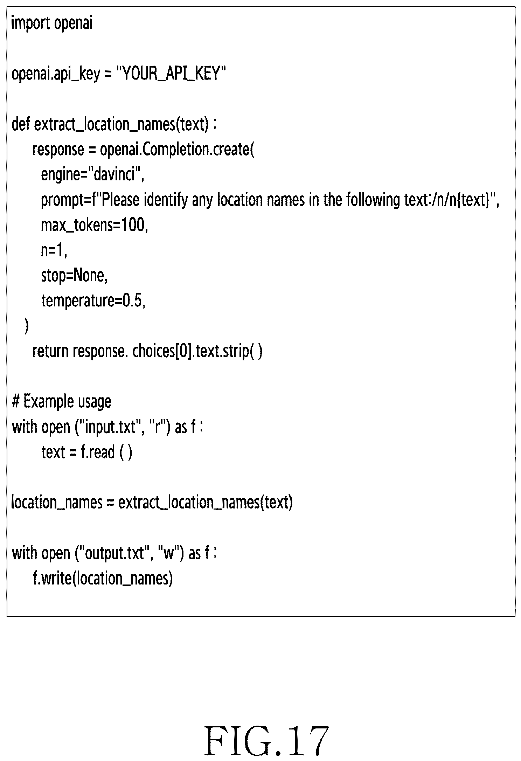

FIG. 17 illustrates an example place (or location) entity recognition algorithm for an MCPTT service according to various embodiments of the disclosure. The entity recognition unit 1320 of FIG. 1 may recognize entities for the place or location included in a message, based on the algorithm described in FIG. 17. For example, a place name such as "Seoul", "Suwon", etc., a name of a specific place such as "zone A", "building A", etc., a name relevant to a place such as a subway station, a bus stop, etc., may be recognized as the entity.

An entity recognition unit according to an embodiment may perform a function, based on not only the algorithms of FIGS. 15, 16, and/or 17but also various algorithms capable of extracting an entity from a message. In addition, an entity recognition unit according to an embodiment may extract not only an entity relevant to a name of a person, a user's affiliation, and a place but also various types of entities required to perform a mission. The type of entities which may be extracted by the entity recognition unit is not limited to that disclosed in the disclosure, and may include, for example, other types of entities within the scope applicable through modification by those skilled in the art.

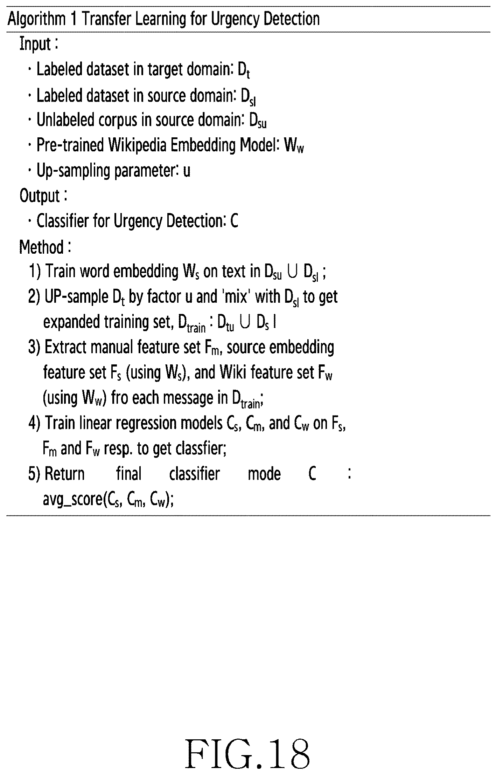

FIG. 18 illustrates an example urgency calculation algorithm for an MCPTT service according to various embodiments of the disclosure.

The urgency classifier 1340 of FIG. 1 may identify an urgency of a request included in a message according to the algorithm of FIG. 18. However, an algorithm of identifying the urgency is not limited to that described in FIG. 18, and may include other urgency generation algorithms within the scope applicable through modification by those skilled in the art.

FIG. 19 illustrates an example apparatus (i.e., an MCPTT apparatus) for providing an MCPTT service according to various embodiments of the disclosure.

Referring to FIG. 19, an MCPTT apparatus 1900 includes a transceiver 1910, a processor 1930 coupled to the transceiver 1910, and a memory 1920 coupled to the processor 1930. The MCPTT apparatus of FIG. 19 may correspond, for example, to the apparatus of FIG. 1. Specifically, the MCPTT apparatus of FIG. 19 may correspond to the MCPTT server 1200 of FIG. 1, may correspond to a device constructed by combining the MCPTT server 1200 of FIG. 1 with the AI server 1300, and/or may correspond to a device constructed by combining the MCPTT server 1200 with the AI server 1300 and the location server 1400. In addition, the MCPTT apparatus 1900 of FIG. 19 may perform operations including those operations described with reference to FIGS. 2, 3, 4, 5, 6, 7, and 8.

The MCPTT apparatus 1900 may include more or fewer components than the aforementioned components. In addition, the transceiver 1910, the processor 1930, and the memory 1920 may be implemented with a single chip.

The transceiver 1910 may, for example, collectively refer to a receiver and a transmitter, and may perform transmission/reception with respect to a terminal of a user. Information to be transmitted/received may include control information and data. For example, message information created by the user may be received by the MCPTT apparatus 1900 via the transceiver 1910, and priority setting information for a floor may be transmitted to the user via the transceiver 1910. The transceiver 1910 may include, for example, an RF transmitter for up-converting and amplifying a frequency of a transmitted signal and an RF receiver for low-noise amplifying and down-converting a frequency of a received signal. However, this is only an example of the transceiver 1910, and components of the transceiver 1910 are not limited to an RF transmitter and RF receiver. The transceiver 1910 may receive a signal via a radio channel and output it to the processor 1930, and may transmit the signal output from the processor 1930 via the radio channel.

The memory 1920 may store a program and data required for an operation of the apparatus. In addition, the memory 1920 may store control information or data included in a signal obtained from the apparatus. The memory 1920 may be a storage medium such as a Read Only Memory (ROM), a Random Access Memory (RAM), a hard disk, a Compact Disc-ROM (CD-ROM), a Digital Versatile Disc (DVD), etc., or a combination of storage media.

The processor 1930 include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. The processor 1930 may control a series of processes so that the apparatus operates as described above. For example, the transceiver 1910 may receive a data signal including a message transmitted from the user, and may identify a result of receiving a data signal to be transmitted.

According to an embodiment, a method for providing a Mission Critical Push To Talk (MCPTT) service may include receiving a message created from any one user among users of an MCPTT group, analyzing the message, and setting a floor priority of the users of the MCPTT group, based on a result of analyzing the message.

In an embodiment, the analyzing of the message may include classifying a type of the message. The classifying of the type of the message may include identifying whether the message is an interrogative type or an imperative type.

In an embodiment, the analyzing of the message may further include, when the message is the interrogative type or the imperative type, recognizing an entity included in the message. The entity may include a name of at least one of the users and/or a name of a feature or location for the at least one of the users. The feature for the at least one of the users may represent a specialty, affiliation, or organization of the users. Alternatively, it may include another element representing the feature of the users.

In an embodiment, the analyzing of the message may further include identifying a relevance to a mission for the recognized entity. The setting of the floor priority of the users may include, when the recognized entity has the relevance to the mission, setting a high floor priority to a user relevant to the recognized entity. In this case, the user relevant to the recognized entity may include a user having a name of the recognized entity, a user located close to a place of the recognized entity, or a user having a feature of the recognized entity.

In an embodiment, the analyzing of the message may further include, when the recognized entity includes names of at least two users among the users and the names of the at least two users have relevance, calculating an urgency of requests included in the message. The setting of the floor priority of the users may include setting a floor priority of the at least two users, based on the calculated urgency. For example, a higher floor priority may be assigned to a user who is a target of a high urgency request.

In an embodiment, the method of providing the MCPTT service may include receiving location information of the users. When the recognized entity includes a first name for a location, the analyzing of the message may include identifying a user closest to the location corresponding to the first name among the users, based on the location information of the users. In addition, the setting of the floor priority of the users may include setting a high floor priority to the closest user.

In an embodiment, the identifying of relevance to the recognized entity may include comparing the location corresponding to the first name information and a location of a mission place. The location of the mission place may be received from any one user among the users. Any one user among the users may tag a specific place through a dashboard. A location of the tagged place may represent the location of the mission place.

In an embodiment, the method of providing the MCPTT service may include receiving location information of users. The recognized entity may include a first name for a location and a name of a first user. The setting of the floor priority of the users may further include identifying whether a location of the first user is close to a location corresponding to the first name.

In an embodiment, the setting of the floor priority of the users may include, when the location of the first user is close to the location corresponding to the first user, assigning a high floor priority to the first user, when the location of the first user is far from the location corresponding to the first name, storing the location corresponding to the first name, and, when there is a floor request from the first user, identifying whether the location of the first user is close to the location corresponding to the first name.

In an embodiment, an apparatus for providing an MCPTT service may include a transceiver and a processor coupled to the transceiver. The processor may perform operations of receiving a message created from any one user among users of an MCPTT group, analyzing the message, and setting a floor priority of the users of the MCPTT group, based on a result of analyzing the message.

In an embodiment, the analyzing of the message may include classifying a type of the message. The classifying of the type of the message may include identifying whether the message is an interrogative type or an imperative type.

In an embodiment, the analyzing of the message may include, when the message is the interrogative type or the imperative type, recognizing an entity included in the message. The entity may include a name of at least one of the users and/or a name of a feature or location for the at least one of the users.

In an embodiment, the analyzing of the message may include identifying a relevance to a mission for the recognized entity. The setting of the floor priority of the users may include, when the recognized entity has the relevance to the mission, setting a high floor priority to a user relevant to the recognized entity.

In an embodiment, the analyzing of the message may include, when the recognized entity includes names of at least two users among the users and the names of the at least two users have relevance, calculating an urgency of requests included in the message. The setting of the floor priority of the users may include setting a floor priority of the at least two users, based on the calculated urgency.

In an embodiment, the processor may perform an operation of receiving location information of the users. When the recognized entity includes a first name for a location, the analyzing of the message may include identifying a user closest to the location corresponding to the first name among the users, based on the location information of the users. The setting of the floor priority of the users may include setting a high floor priority to the closest user.

In an embodiment, the identifying of the relevance to the recognized entity may include comparing the location corresponding to the first name and a location of a mission place. The location of the mission place may be received from any one user among the users.

In an embodiment, the processor may perform an operation of receiving location information of the users. The recognized entity may include a first name for a location and a name of a first user. The setting of the floor priority of the users may include identifying whether a location of the first user is close to a location corresponding to the first name.

In an embodiment, the setting of the floor priority of the users may include, when the location of the first user is close to the location corresponding to the first user, assigning a high floor priority to the first user, when the location of the first user is far from the location corresponding to the first name, storing the location corresponding to the first name, and when there is a floor request from the first user, identifying whether the location of the first user is close to the location corresponding to the first name.

In an embodiment, the processor may perform operations of receiving a message created from any one user among users of an MCPTT group, and analyzing the message. The analyzing of the message of the processor may include classifying a type of the message, recognizing an entity included in the message, and identifying relevance to the recognized entity. When the recognized entity has relevance, the transceiver may transmit the recognized entity to an MCPTT server.

According to the aforementioned example methods and apparatuses for providing an MCPTT service, there can be an increase in efficiency of communication within an MCPTT group. According to various embodiments, since a floor priority of users is properly set based on content of a message created by the users in a group, it can be possible, for example, to reduce an operation of identifying specific information in order for a user who is a speaker to deliver an opinion.

For example, when a user intends to create a message related to a specific location or a specific feature, the user may create the message without having to identify which user is close to the specific location or which user has the specific feature. An apparatus and method according to various embodiments may assign a floor priority to an appropriate user corresponding to a request included in a message, based on location information and/or an attribute (or a feature) of the user.

An MCPTT service may be applied to a Mutual Aid Group (MAG). The MAG may represent, for example, a plurality of agencies which communicate and cooperate with each other in an emergency situation. The MAG may share a communication channel between different agencies, enabling mutual communication on a real-time basis. The MAG may be created by a group owner who invites other agencies to the group. When certain agencies join the group, they may communicate with each other using the MCPTT service.

The MCPTT service may provide a reliable and safe communication service for public safety agencies. Through the MAG, communication and effective cooperation may be achieved between different agencies in an urgent situation, enabling a quick and effective response.

Various embodiments of the disclosure may be applied to the following situations.
1) It may be helpful in a situation such as highway patrol, criminal pursuit, or the like.
2) Police officers may help maintaining order and preventing or reducing and responding to crimes at festivals, sporting events, or the like.
4) It may help carrying out a protection work for celebrities.
5) It may help controlling large-scale disaster situations caused by natural disasters.

Various embodiments of the disclosure may recognize an entity of a message to dynamically change a floor priority between users of the same level. In addition, a location entity may be recognized from the message to change a floor priority of users, based on location information, and the floor priority of users may be changed based on an urgency for a plurality of requests.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of items unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used herein, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an Application-Specific Integrated Circuit (ASIC).

Various embodiments as set forth herein may be implemented as software (e.g., a program) including one or more instructions that are stored in a storage medium (e.g., internal memory or external memory) that is readable by a machine (e.g., an electronic device). For example, a processor of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. The term "non-transitory" refers to the storage medium being a tangible device, and does not include a signal (e.g., an electromagnetic wave), but this term does not differentiate between data being semi-permanently stored in the storage medium and data being temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., Compact Disc Read Only Memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or a plurality of entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein

## Claims

1. A method for providing a Mission Critical Push To Talk (MCPTT) service, the method comprising:
receiving a message created from any one user among users of an MCPTT group;
analyzing the message; and
setting a floor priority of the users of the MCPTT group, based on a result of analyzing the message,
wherein the analyzing of the message comprises classifying a type of the message,
wherein the classifying of the type of the message comprises identifying whether the message is an interrogative type message or an imperative type message.

2. The method of claim 1, wherein the analyzing of the message comprises, when the message is the interrogative type or the imperative type, recognizing an entity included in the message,
wherein the entity includes a name of at least one of the users and/or a name of a feature or location for the at least one of the users.

3. The method of claim 2,
wherein the analyzing of the message comprises identifying a relevance to a mission for the recognized entity, and
wherein the setting of the floor priority of the users comprises, when the recognized entity has relevance to the mission, setting a high floor priority to a user relevant to the recognized entity.

4. The method of claim 3,
wherein the analyzing of the message comprises, when the recognized entity includes names of at least two users among the users and the names of the at least two users have relevance, calculating an urgency of requests included in the message, and
wherein the setting of the floor priority of the users comprises setting a floor priority of the at least two users, based on the calculated urgency.

5. The method of claim 3, comprising receiving location information of the users.

6. The method of claim 5,
wherein, when the recognized entity includes a first name for a location, the analyzing of the message comprises identifying a user closest to the location corresponding to the first name among the users, based on the location information of the users, and
wherein the setting of the floor priority of the users comprises setting a high floor priority to the closest user.

7. The method of claim 6, wherein the identifying of the relevance to the recognized entity comprises comparing the location corresponding to the first name information and a location of a mission place,
wherein the location of the mission place is received from any one user among the users.

8. The method of claim 5,
wherein the recognized entity includes a first name for a location and a name of a first user, and
wherein the setting of the floor priority of the users comprises identifying whether a location of the first user is close to a location corresponding to the first name.

9. The method of claim 8, wherein the setting of the floor priority of the users comprises:
when the location of the first user is close to the location corresponding to the first user, assigning a high floor priority to the first user;
when the location of the first user is far from the location corresponding to the first name, storing the location corresponding to the first name; and
when there is a floor request from the first user, identifying whether the location of the first user is close to the location corresponding to the first name.

10. An apparatus for providing a Mission Critical Push To Talk (MCPTT) service, the apparatus comprising:
a transceiver;
a processor; and
memory storing instructions that, when executed by the processor, cause the apparatus to:
receive a message created from any one user among users of an MCPTT group;
analyze the message; and
set a floor priority of the users of the MCPTT group, based on a result of analyzing the message,
wherein the analyzing of the message comprises classifying a type of the message, and
wherein the classifying of the type of the message comprises identifying whether the message is an interrogative type message r an imperative type message.

11. The apparatus of claim 10, wherein the memory further comprises the instructions that, when executed by the processor, cause the apparatus to:
when the message is the interrogative type or the imperative type, recognize an entity included in the message, and
wherein the entity includes a name of at least one of the users and/or a name of a feature or location for the at least one of the users.

12. The apparatus of claim 11, wherein the memory further comprises the instructions that, when executed by the processor, cause the apparatus to:
identify a relevance to a mission for the recognized entity, and
when the recognized entity has relevance to the mission, set a high floor priority to a user relevant to the recognized entity.

13. The apparatus of claim 12, wherein the memory further comprises the instructions that, when executed by the processor, cause the apparatus to:
when the recognized entity includes names of at least two users among the users and the names of the at least two users have relevance, calculate an urgency of requests included in the message, and
set a floor priority of the at least two users, based on the calculated urgency.

14. The apparatus of claim 12, wherein the memory further comprises the instructions that, when executed by the processor, cause the apparatus to:
receive location information of the users,
when the recognized entity includes a first name for a location, identify a user closest to the location corresponding to the first name among the users, based on the location information of the users,
set a high floor priority to the closest user, and
compare the location corresponding to the first name and a location of a mission place,
wherein the location of the mission place is received from any one user among the users.

15. The apparatus of claim 12,
wherein the recognized entity includes a first name for a location and a name of a first user, and
wherein the memory further comprises the instructions that, when executed by the processor, cause the apparatus to:
receive location information of the users,
identify whether a location of the first user is close to a location corresponding to the first name;
when the location of the first user is close to the location corresponding to the first user, assign a high floor priority to the first user;
when the location of the first user is far from the location corresponding to the first name, store the location corresponding to the first name; and
when there is a floor request from the first user, identify whether the location of the first user is close to the location corresponding to the first name.
